# EUROPEAN PATENT APPLICATION

(11) **EP 4 095 104 A1**
(43) Date of publication of application: **30.11.2022**
(21) Application number: 22020238.6
(22) Date of filing: 26.05.2022
(51) Int. Cl.: C02F 5/00, C02F 5/08

(54) **WATER TREATMENT APPARATUS**

(30) Priority: 28.05.2021 IT 202100013973
(71) Applicant: Betti, Roberto, 47923 Rimini (RN) (IT)
(72) Inventor: Betti, Roberto, 47923 Rimini (RN) (IT)
(74) Representative: Montebelli, Marco

(57) **Abstract**

A water treatment apparatus comprises at least one cylinder (1) containing a mixture of food-safe gases, an external sensor (2) outside the water flow, suitable for instantaneously detecting the water flow rate, and a supplying device (3), suitable for processing the data arriving from the sensor (2) and for taking gas from the cylinder (1) to introduce it into the water flow, a connecting cable (4) being interposed between the sensor (2) and the supplying device (3).

## Description

The invention relates to a water treatment apparatus.

One of the plumbing problems most often occurring in the pipes of plants for various purposes is caused by so-called water "hardness": this term refers to the presence in the water, whether it is drinking water or not, of an excessive quantity of mineral precipitates deriving mostly from calcium and magnesium carbonates. In actual fact, various types of dissolved substances are already present in the water taken from aquifers and springs. In particular, calcium and magnesium bicarbonates, soluble substances, are in equilibrium with calcium and magnesium carbonates and with carbon dioxide, which are instead not very soluble.

This equilibrium can be altered by various causes; for example, in the case of water supplied at 10 - 15 °C, even an increase in the temperature to 30 - 35 °C can trigger the calcareous precipitation process. When the temperature increases, carbon dioxide is released which favours the conversion of the bicarbonates into carbonates, substances which are not very soluble which form deposits often called "limescale".

The "hardness" of the water is preferably measured in French degrees (°Fr), where 1 °Fr corresponds to 10 milligrams of calcium carbonate per litre of water or to 10 ppm (parts per million) of calcium carbonate.

Amongst various methods used to eliminate calcium and magnesium from water, until around ten years ago the most effective and widespread involved the use of ion exchange resin softeners.

These resins are organic substances which have the feature of having ions, often of sodium, in equilibrium with those dissolved in water, for example of calcium and magnesium. When the water passes through one of these resins, ion exchange takes place, in which the calcium and magnesium ions replace the sodium, which, in water, forms sodium carbonate, perfectly soluble.

Once the resin loses most of the sodium ions, it is said to be "used up" and must therefore be "regenerated" by passing through it water containing a high concentration of sodium ions, in such a way as to reverse the reaction described above.

There are various types of resin softeners, which differ above all in the ways in which the resins used are regenerated: however, despite improving the situation, they too have various disadvantages.

In fact, in order to perform its functions the softener consumes electricity, salt for the regeneration, and water for washing and rinsing the resins increasing consumption by 15/30% as regards the softened water.

It also requires both periodic checking by the user to top up the salt and clean the water infeed filter and routine and extraordinary maintenance.

Every year the technician must check the softener to verify correct operation by carrying out the water hardness test, and every five years the resins must also be substituted and disposed of.

Moreover, for technical and legal reasons the softener cannot retain all of the calcareous hardness, instead it can only lower it to a minimum of 12/14 French degrees, otherwise it would cause some disruption such as for example difficulty rinsing soap from the hands and body, difficulty rinsing soap from clothing, an excessive increase in salt ions in the water which increases the corrosion of metal pipes.

Therefore, to contain the disruption an untreated part of water is re-introduced through a suitable mixer in order to reach the desired degree of hardness and chemical products such as polyphosphates and polysilicates are also added in an attempt to protect the pipes and to avoid causing limescale deposits.

In order to remove limescale, which forms in any case, it is necessary to use harmful and polluting descalers with consequent wear due to corrosion of the equipment treated.

In recent years a method has been proposed which involves the use of carbon dioxide and derived mixtures in the form of gases to be injected into the pipes, as indicated in Italian patent No. 1399667, priority document of PCT application WO2011/125081. The mixtures used make use to various extents of gases defined "food-safe", such as, for example, nitrogen, argon and oxygen, since they are suitable for use in the preservation of food and drinks.

The injected gas causes biofilm and limescale to dissolve, permanently removing the principal location of proliferation of many bacteria, including legionella.

The action of the gas mixed in the water allows rapid cleaning of the pipes, boilers, heat storage tanks, taps and fittings, and prevents the subsequent formation of new limescale, also avoiding metal oxidation, that is to say, rust. The normal use of the mixture of gases in place of the softener allows the plants and the relative equipment to always remain clean and fully efficient favouring energy savings, and to drastically reduce repairs and maintenance caused by calcareous deposits which would have to be removed with polluting chemical products.

In carrying out its action the gas does not change the organoleptic properties of the water and therefore can be used not just in drinking water but also in thermal waters. It does not produce waste, it does not consume water and it does not require complex plants for installation.

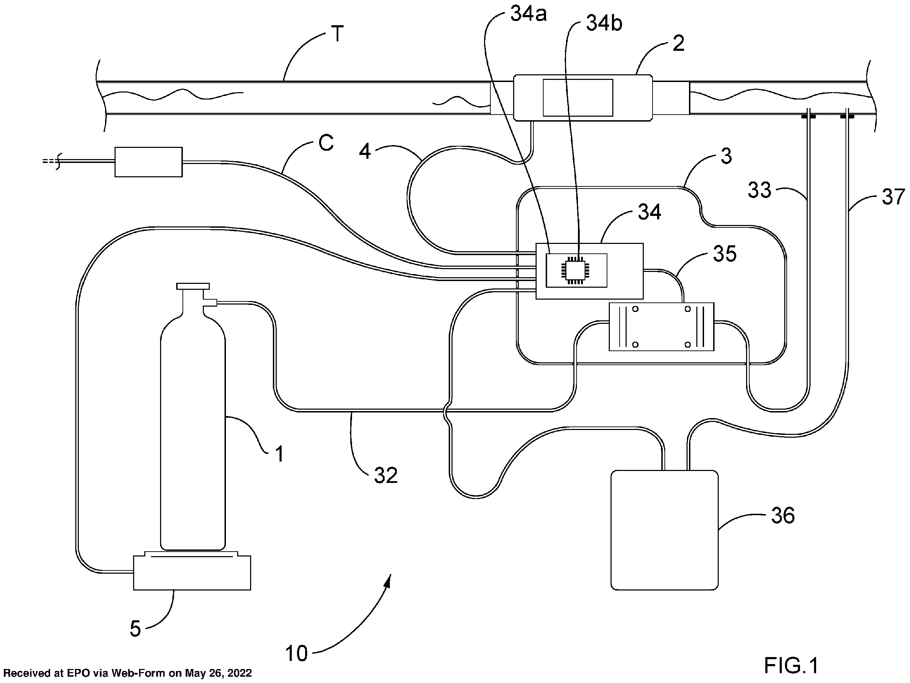

As can be read in the above-mentioned PCT application, if the quality of the water to be treated is stable, a simple regulator can be used which controls the equilibrium between flow rate and pressure of the mixture depending on the changes in the parameters of the water coming out: this regulator may be a commercial manual flow rate and pressure regulator or an electronically controlled automatic regulator shown in Figure 1 (page 21, lines 15 - 23). However, in the first case the metering system is of the mechanical type and places many limits on adjustment of introduction of the mixture into the piping. The greatest difficulties are normal pressure changes in the water system which involve abnormal consumption and waste due to puffs of gas which accumulates in the pipes and which comes out when the taps are opened.

Moreover, adjustment cannot be modulated based on the actual passage and consumption of water, with the risk of emptying the cylinder if the water pressure drops and constraining the plants to a continuous check of the metering by the technician.

In the second case, referring to Figure 1 of the document indicated, it can be clearly seen that the automatic regulator involves the use of a solenoid valve controlled by a PLC, also referred to in the description (page 20, lines 22 - 28). Therefore it is evident that the response times of a solenoid valve, which allows at most several injections per second, may meet the requirements of large piping, but are completely unsuitable when the diameter of the piping is less than one inch, as is the case in most residential and commercial plants.

The aim of this invention is therefore to eliminate the above-mentioned disadvantages.

The invention, with the features set out in the claims, achieves the aim thanks to an instantaneous check of the quantity of water in transit in the pipe.

The main advantage obtained by means of this invention is essentially the fact that the correct quantity of gas for treatment of the water can be defined and injected in real time. Therefore, build-ups of gas in the piping, puffs of gas upon opening the taps and any waste due to the release of gas when water is not flowing in the pipes are avoided.

Moreover, complete elimination of the solenoid valves and of the PLC allows a considerable reduction in the plant electronic components, and therefore in the physical dimensions and electricity consumption, making the plant much more reliable and limiting the need for the presence of an operator to the initial adjustment and to the normal periodic checks. Plus, the reduced dimensions of the electronic components used, reduced to a circuit board, allow maximum versatility in the management of transportation, of application and of the treatments, such as, for example, those which allow waterproofing.

Finally, the invention is extremely easy to install even in plants already in use with minimal work.

Further advantages and features of the invention will be more apparent in the detailed description which follows, with reference to the accompanying drawings, which show an example, non-limiting embodiment, in which:
- Figure 1 is an assembly diagram of the invention.

As seen in the figure, the invention relates to a water treatment apparatus, comprising at least one cylinder 1 containing a mixture of food-safe gases, in general carbon dioxide-based, at least one external sensor 2 on the outside of a pipe T in which a water flow runs, suitable for instantaneously detecting the water flow rate, and a supplying device 3, suitable for processing the data arriving from the sensor 2 and for taking gas from the cylinder 1 to introduce it into the water flow; a connecting cable 4 which allows data transfer is interposed between the external sensor 2, preferably of the ultrasonic type, and the supplying device 3.

The supplying device 3 comprises an electronic metering device 34, connected to the electricity network by a power cable C and suitable for adjusting the gas supplied to the flow rate detected by the external sensor 2, and a capillary injection device 31, suitable for taking gas from the cylinder 1 through a first duct 32 for then blowing it into the pipe T through a second duct 33.

Located inside the electronic metering device 34 there is a dedicated board 34a, specially made for this purpose, provided with the usual electronic components and with a microcontroller 34b, which allow the use of a PLC to be avoided, minimising the dimensions of the apparatus 10 and consequently electricity consumption, and increasing plant reliability and versatility.

The capillary injection device 31, which may even not be in a single body with the supplying device 3, provided it keeps an electrical connection 35 with the electronic metering device 34, allows the introduction of bubbles with a diameter of between 2 and 3 millimetres at a frequency of up to 30 injections per second. Even considering this, the apparatus 10 is extremely easy to install even on existing plants, since the second duct 33 is so compact that in order to be joined to the pipe T it only requires connection to an existing tap or making a hole with a diameter of less than one centimetre.

The apparatus 10 may also comprise a load cell 5, suitable for detecting the weight of the cylinder 1, connected to the metering device 34 in such a way as to indicate well in advance when the gas is running out.

Finally, the supplying device 3 may also be provided with a metering device 36 for disinfectant products, usually liquids, which are injectable into the pipe T through a third duct 37.

## Claims

1. A water treatment apparatus, comprising at least one cylinder (1) containing a mixture of food-safe gases, at least one external sensor (2) outside the water flow, suitable for instantaneously detecting the water flow rate, and a supplying device (3), suitable for processing the data arriving from the sensor (2) and for taking gas from the cylinder (1) to introduce it into a pipe (T) in which a water flow runs, a connecting cable (4) being interposed between the sensor (2) and the supplying device (3), said apparatus being **characterised in that** the supplying device (3) comprises an electronic metering device (34), suitable for adjusting the gas supplied to the flow rate detected by the external sensor (2), and a capillary injection device (31), connected to the cylinder (1) by means of a first duct (32) for the passage of the gas, suitable for blowing the gas into the water through a second duct (33).

2. The apparatus according to claim 1, **characterised in that** it comprises a load cell (5), suitable for detecting the weight of the cylinder (1), connected to the metering device (34) in such a way as to indicate when the gas is running out.

3. The apparatus according to claim 1, **characterised in that** the capillary injection device (31) allows the introduction of bubbles with a diameter of between 2 and 3 millimetres at a frequency of up to 30 injections per second.

4. The apparatus according to claim 1, **characterised in that** the external sensor (2) is an ultrasonic sensor.

5. The apparatus according to claim 1, **characterised in that** it comprises a metering device (6) for disinfectant products.

6. The apparatus according to claim 1, **characterised in that** the electronic metering device (34) comprises a dedicated board (34a).

7. The apparatus according to claim 6, **characterised in that** the board (34a) is provided with a microcontroller (34b), which controls its operation.
